Europäisches Patentamt

European Patent Office

Office européen des brevets

(19)

(11) Veröffentlichungsnummer: **0 243 909**
**B1**

(12) **EUROPÄISCHE PATENTSCHRIFT**

(45) Veröffentlichungstag der Patentschrift: **25.07.90**

(51) Int. Cl.⁵: **B 27 B 33/08,** B 23 D 61/02

(21) Anmeldenummer: **87106043.0**

(22) Anmeldetag: **24.04.87**

(54) **Kreissägeblatt.**

(30) Priorität: **29.04.86 DE 8611735 u**

(43) Veröffentlichungstag der Anmeldung:
**04.11.87 Patentblatt 87/45**

(45) Bekanntmachung des Hinweises auf die
Patenterteilung:
**25.07.90 Patentblatt 90/30**

(84) Benannte Vertragsstaaten:
**AT BE CH DE ES FR GB GR IT LI LU NL SE**

(56) Entgegenhaltungen:
**DE-A-2 654 625**
**DE-A-2 703 825**
**DE-A-3 105 926**
**DE-A-3 119 603**
**DE-A-3 225 019**

(73) Patentinhaber: **Fries, Berthold**
**Am Breidenbach 9**
**D-5920 Bad Berleburg (DE)**

(72) Erfinder: **Fries, Berthold**
**Am Breidenbach 9**
**D-5920 Bad Berleburg (DE)**

(74) Vertreter: **Missling, Helmut, Dipl.-Ing.**
**Bismarckstrasse 43**
**D-6300 Lahn-Giessen 1 (DE)**

Courier Press, Leamington Spa, England.

## Beschreibung

Bei Kreissägeblättern entstehen durch die allgemein zu leistenden Arbeiten immer, und teils gravierende, Peripherieerwärmungen. Die dadurch zwischen Außenkranz und Zentrum entstehenden Temperaturdifferenzen erzeugen Spannungen sowie Plandeformierungen bis hin zu Wellenformbildungen. Diese wiederum begünstigen negatives Schwingungsverhalten mit der Folge von Peripherieauslenkungen bzw. Schnittverlaufungen und der weiteren Nachteiligkeit unnatürlicher Schneidenbelastungen sowie geringer Standzeiten. Die Rotationsdaten bzw. die Fliehkräfte unterstützen den Prozeß zur Instabilität.

Sogenannte Innenspannung ist zur Funktion notwendig. Diese Innenspannung wird durch Materialstreckung (Walzen oder Hämmern) vor dem Blatteinsatz eingebracht; sie ist, in Orientierung an Rotationsdaten und unterstellter bzw. angenommener Peripherieerwärmung, eine konstante Größe und diese Energie der Innenspannung ist in Betrieb nicht reproduzierbar, d. h. geht die Innenspannung (Materialermüdungen, konzentrierte Erhitzungen, "Brandflecken", Verbeulungen etc.) verloren, oder erhöht sich die angenommene Peripherieerwärmung, ist ein ordentlicher Schneidevorgang nicht möglich.

Für die Anwender, für den Markt, kommt noch als gravierender Nachteil hinzu, daß Handwerker zur Einbringung der Innenspannung nicht (oder nur ganz selten) zur Verfügung stehen. Bei entsprechend dünnen Blättern muß die handwerkliche Blattbehandlung (Richten und Spannen) nach jeder Einsatzphase (fünf bis zwanzig Stunden) erfolgen. Weil aber die Handwerker dazu fehlen, praktiziert man halt den Einsatz entsprechend starker Blätter mit großen Schnittfugen. Rein physikalisch vollzieht sich zwar bei starken bzw. dicken Blättern genau derselbe Vorgang wie bei dünnen Blättern, allerdings mit dem praktischen Vorteil, daß die prozentualen Auslenkungen (Verformungen, Planabweichungen), bezogen auf die Stammblattdicke, für die Schneiden- bzw. Zerspankinematik etwas bessere Voraussetzungen bieten.

Diese Zusammenhänge sind bekannt und führten zu einem Stand der Technik in Form von

a) Dehnungsschlitzen/Dehnungslöchern,

b) flanschlosen Antrieben mit Blattführungen und

c) sogenannten Thermostreß-Verfahren.

Zu a): Dehnungsschlitze oder entsprechende Felder/Löcher bei herkömmlichen, flanschgefaßten Blattantrieben können zwar die Plan-/Blattebenenverformungen durch Ansätze von Spannungsausgleichsmöglichkeiten bedingt herabmindern, die Dehnungsschlitze, Felder/Löcher, lösen aber auch gleichzeitig die Innenspannungswirkweise auf und sie führen über allgemeine Labilitäten zu einer schlechten Zentrumsfixierung bzw. sie sind grundsätzlich kein Mittel zur Herbeiführung der stets anzustrebenden und so wichtigen Zugspannungen im Außenkranzbereich.

Zu b): Flanschlose Antriebe durch eine Art von Vielkeilwelle, ohne übliche und die Axialfixierung übernehmende Flansche, haben ebenfalls den Nachteil, daß die klassische Wirkweise von Innenspannungen gestört ist. Bei dieser Technik wird die Peripherie durch Blattführungen stabilisiert mit dem Ziel, die Schwingungen im losen, flanschlosen Zentrum auszupendeln. Die Blattführungen bewirken aber zusätzliche Peripherieerwärmungen und führen somit wieder zum Aufschaukeln all der bekannten Nachteile. Durch eine Reihe von Blattführungsanordnungen werden zwar Schwingungsdämpfungen versucht, im allgemeinen gilt aber die flanschlose Technik als ein System mit relativ hohen Schnittbahnverlaufungen.

Zu c): Handwerklich eingebrachte Innenspannung (Walzen, Hämmern) ist bekanntlich in Betrieb nicht reproduzierbar. Das sogenannte Thermostreßverfahren will diesen Nachteil auflösen, indem die Temperaturdifferenzen zwischen Peripherie und Zentrum durch Meßgeräte zur Feststellung kommen und davon ableitend durch eine Wärmespule der Blattinnenbereich aufgeheizt wird. Die Wärmeausdehnungen führen zwar zu einem bestimmten Druck nach außen, sie sind aber nicht in der notwendigen Weise (in Abhängigkeit von den Rotationsdaten und der wirklich erreichten Wärmezonengröße) definierbar und die Wärmespulenwirkung führt auch wieder zur Auflösung der konstant notwendigen Zentrumsfixierung.

Eine andere Lösung zur Vermeidung all der aus Temperaturen und Rotation entstehenden Nachteile soll dadurch erreicht werden, daß die Blattzentrumsbohrungen bzw. deren Randzonen entsprechend geformt sind und auf diese Strukturierungen durch den Drehsinn der Antriebswelle Schiebekräfte ausgeübt werden. Die Antriebswelle hat dabei zu den Zentrumsstrukturierungen analog geformte Erhebungen. Diese Systeme haben aber grundsätzliche Nachteile insofern, daß erstens die Schiebekräfte (tangential) nicht exakt in radiale Drücke umzuwandeln sind, daß zweitens die Schiebe-/Druckkraft nicht definierbar ist und weitestgehend von der Drehenergie abhängig bleibt, und drittens ist die gesamte Machbarkeit von den Toleranzverhältnissen der Antriebswellenerhebungen und den Zentrumsbereichsstrukturierungen abhängig. Gleichmäßig verteilte Drücke nach außen sind über diese Systeme nicht zu praktizieren.

Bei all den geschilderten Ausführungen ist es also nicht möglich, gezielte und dauerhafte Zugspannungen in der Peripherie, in dem Arbeitskranz, zu erzeugen und es gibt keine Lösungen, bei denen die unvermeidlichen Temperaturdifferenzen ohne negative Auswirkungen bleiben. Die Probleme aus all den widrigen radialen-tangentialen Zug-/Druckspannungen sind bei den vorstehend geschilderten Ausführungen nicht gelöst.

Bekannt ist eine Lösung mit zweiter Energie im Zentrum. Bei diesem System wirkt im Blattzentrum nicht nur der Drehantrieb, sondern es werden über einen Druckkraftgeber mit einer Vielzahl von untereinander unabhängigen Kraftelementen (z. B. Hydraulikkolben) auf unabhängig voneinander reagierende Blattebenensegmente (Speichen), bei absolut konstanter Blatt-Zentrumsfixierung, radiale Druckkräfte ausgeübt, die alle Verformungen aus Temperaturen sowie Fliehkräften ausgleichen und stetige Zugspannungen in der Peripherie auslösen. Außenkranzerwärmungen führen nicht mehr zu Auslenkungen und Schnittbahnverlaufungen. Da jedoch das Schrumpfungsverhalten bei Wiedererkalten der Peripherie durch die unter Druck gehaltene Geometrieveränderung anderen Merkmalen als bei der Dehnung unterliegt, muß die Druckkraftgeberwirkung steuer- und regelbar sein und dies führt zu erheblichen und teils komplizierten Aufwendungen. Diese Dehnungs-/Schrumpfungsmerkmale im Außenkranz führen auch dazu, daß bei herkömmlichen Blättern mit eingewalzter oder eingehämmerter Innenspannung bei Wiedererkalten der Peripherie die geometrisch plangerechte Rückstellung trotz — oder gerade wegen — genügender Innenspannung nicht möglich ist. Es kommt bei Wiedererkaltungen immer wieder zu Plandeformierungen. Insofern sind die gesamten (nicht steuerbaren) Innenspannungstheorien zwar teils nicht falsch, sie können aber nur mit großen Einschränkungen als wirksames Mittel bezeichnet werden.

Desweiteren ist ein Vorschlag bekannt, wonach Zugspannungen im Zahnkranz durch in radialer Richtung strukturierte Segmente ausgelöst werden. Auf die als Trägerkonstruktion angelegten Segmente wirkt aus dem Zentrum heraus eine Energie in tangentialer Richtung. Die Segmente werden zur Bildung der Zugspannungen praktisch gegeneinander gespreizt. Nachteilig bei diesem System bleibt, daß ein Druckkraftgeber (tangential wirkend) notwendig ist, und die Bauweise bzw. der Durchmesser eines solchen Druckkraftgebers zu konstruktiven Einbringungsschwierigkeiten führt.

Schließlich sind im Kreissägenbereich noch eine Reihe von Verbundbauweisen bekannt, bei all denen aber keine Systeme für dauerhafte und permanente Außenkranz-Zugspannungen integriert sind. Es wird lediglich durch die Verbundbauweise ein gunstigeres Schwingungsverhalten angestrebt. Dies ist sicherlich vorteilhaft, aber es gibt keine Mittel, welche Schwingungsverhalten positiver beeinflussen, als dies gezielte Zugspannungen in der Peripherie bewirken.

Der Erfindung liegt die Aufgabe zugrunde, ein Schnittwerkzeug, z. B. ein reissäge blatt, so auszubilden, daß die aus Temperaturdifferenzen und Fliehkräften entstehenden Dehnungen sowie Deformierungen zu keinen Nachteilen führen, daß im Zahnkranzbereich Zugspannungen vorherrschen — und daß über ein gutes Schwingungsverhalten verlaufungsfreie Schnittbahnen bei dünnen Fugen und langen Standzeiten zu praktizieren sind, und dies letztlich auch bei niedrigeren Werkzeugkosten und Energieeinsparungen durchführbar ist.

Diese Aufgabe wird mit dem kennzeichnenden Teil des Anspruchs 1 gelöst. Vorzugsweise ist die Erfindung in Holzbearbeitungsmaschinen einzusetzen, wo der Markt z. B. bis Blattdurchmessern 600 mm bei voller Nutzung möglicher Schnitthöhen Holzvorschübe bis 80 m/min praktiziert und dabei eine Schnittfuge von möglichst unter 3 mm wünscht.

Gemäß der Erfindung liegt die Lösung in einer — neben dem Drehantrieb — einzubringenden Energie, deren Wirkweisen die Zugspannungen im Zahnkranz auslösen. Eingebracht wird die Energie durch Federklammern (7), oder durch federklammerähnliche Strukturierungen direkt in der Blattebene (Zone 5). Die Energieeinwirkung ist mit den aus Temperaturanstieg resultierenden Geometrieveränderungen gleichgerichtet.

Die sich aus den Schlitzungen und Gefügetrennungen ergebenden Querschnitte (6 und 11) wirken in axialer Richtung versteifend, sie lassen aber eine Ausdehnung in tangentialer Richtung zu; und sie lösen bei entsprechend sektorialenselektierten Härteweisen eine Federwirkung aus. Vorteilhafter zur Spannung der Bandsegmente (2) ist natürlich die Federklammer (7). Die Blattebene (3) übernimmt die Übertragungen der Drehmomente — und dieser Teil hat auch all die Belastungen aus dem statischen und dynamischen Bereich zu beherrschen.

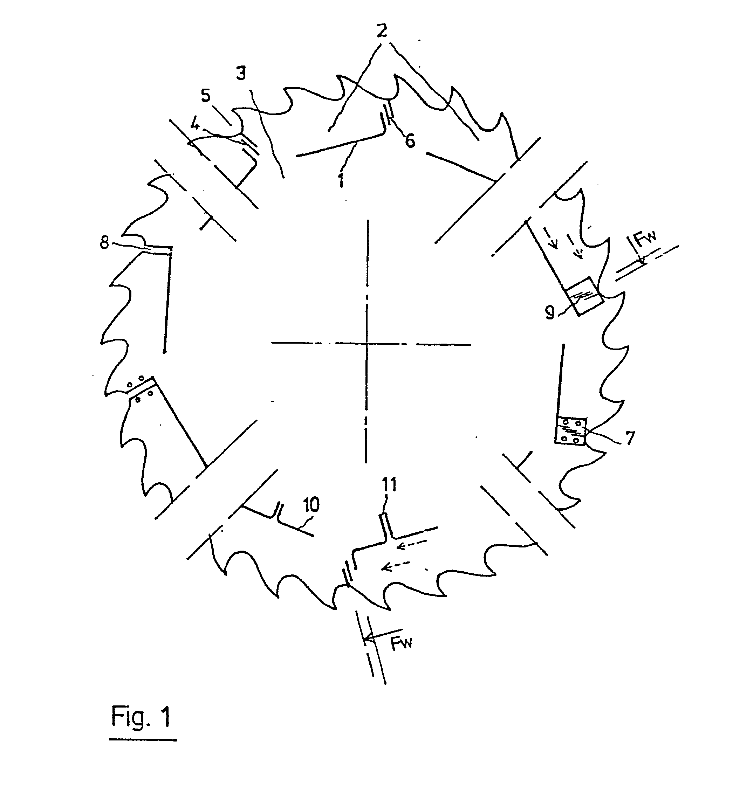

Fig. 1 zeigt im oberen Teil ein Beispiel einer Bandstrukturierung (ohne Federklammer) mit annähernd tangential-radial angeordneten Schlitzen —

im rechten Teil eine Bandstrukturierung mit Federklammer —

im linken Teil ein Beispiel, wie bei Einbeziehung von Federklammern sich die Aussparung darstellen kann —

und im unteren Teil ein Beispiel, auf welche Art zur Erreichung axialer Steifigkeiten die tangentiale Schlitzung unterbrochen sein kann.

**Patentansprüche**

1. Scheibenförmiges, rotierendes Werkzeug, insbesondere Kreissägeblatt, mit am Umfang angeordneten Zähnen und im Blattzentrum angebrachten Flanschen mit zentrischer Bohrung für die Aufnahme einer Antriebswelle, dadurch gekennzeichnet, daß das Werkzeug mehrere, im wesentlichen in tangentialer Richtung verlaufende Schlitzungen bzw. Gefügetrennungen (1) im Außenbereich aufweist, die dieses bandartig segmentiert (2), daß an einer Seite der tangentialen Schlitze (1) die ursprüngliche Blattebene (3) verbleibt, und an der anderen Seite der tangentialen Schlitze (1) durch annähernd radial angebrachte und zur Peripherie gerichtete Schlitzungen bzw. Gefügetrennungen(4) eine fächerförmige Zone (5) gebildet wird.

2. Werkzeug nach Anspruch 1, dadurch gekennzeichnet, daß einer der radialen Schlitze im die Peripherie ausläuft und ein anderer in den tangentialen Schlitz einmündet.

3. Werkzeug nach Anspruch 1, dadurch gekennzeichnet, daß die annähernd radial verlaufenden Schlitzungen (4) und die fächerförmigen Zonen (5, aus 4 und 6) verschieden geformt sind.

4. Werkzeug nach Anspruch 1 bis 3, dadurch gekennzeichnet, daß die Zonen (5) mit den streifenförmigen Querschnittsbildungen (6) durch sektoriale — selektierte Härtevorgänge zur Erreichung intensiver Spannungen bzw. Federwirkungen (Fw) behandelt sind.

5. Werkzeug nach Anspruch 1, dadurch gekennzeichet, daß die durch die Gefügetrennung (1) und radiale Schlitzung (8) entstandene Bandstruktur (2) durch eine Federklammer (7) gespannt wird.

6. Werkzeug nach Anspruch 1 und 5, dadurch gekennzeichnet, daß die Federklammer (7) eingeschweißt, eingelötet oder eingenietet ist.

7. Werkzeug nach Anspruch 1 bis 6, dadurch gekennzeichnet, daß durch eine oder mehrere Unterbrechungen der tangential verlaufenden Schlitzungen (10) durch streifenförmige Querschnittbildungen (11) axiale Stabilitäten für die Bandsegmente (2) entstehen.

8. Werkzeug nach einem der Ansprüche 1 bis 7, dadurch gekennzeichnet, daß die Federwirkweise (7 bzw. Zone 9) entweder in Zahnverlauf oder entgegen den Zahnverlauf gerichtet ist und daß die Federwirkzentren (7 bzw. Zone 5) im mittleren Bereich der Bandstrukturen (2) angeordnet sind.

**Revendications**

1. Outil rotatif en forme de disque, en particulier lame de scie circulaire, comprenant des dents placées sur la périphérie et des brides à forure centrée fixées au centre de la lame destinées à recevoir un arbre moteur, caractérisé en ce que l'outil présente à l'extérieur plusieurs rainures respectivement coupures (1) d'orientation essentiellement tangentielle qui coupent ceux-ci en ségments en forme de ruban (2), que le niveau d'origine de la lame (3) est conservé sur un côté des rainures tangentielles (1) et que, sur l'autre côté des rainures tangentielles (1), une zone en éventail (5) est formée par des rainures respectivement coupures (4) placées approximativement radialement et orientées vers la périphérie.

2. Outil suivant la revendication 1, caractérisé en ce qu'une des rainures radiales se termine dans la périphérie et qu'une autre débouche dans la rainure tangentielle.

3. Outil suivant la revendication 1, caractérisé en ce que les rainures d'orientation approximativement radiale (4) et les zones en éventail (5, de 4 et 6) se distinguent dans leur forme.

4. Outil suivant la revendication 1 à 3, caractérisé en ce que les zones (5) à coupes transversales en forme de bandes (6) sont soumises à des procédures de trempe seléctées par secteur pour atteindre des contraintes respectivement des élasticités (Fw) intenses.

5. Outil suivant la revendication 1, caractérisé en ce que la structure de ruban (2) créée par les coupures (1) et les rainures radiales (8) est tendue par une bride de ressort (7).

6. Outil suivant la revendication 1 et 5, caractérisé en ce que la bride de ressort (7) est soudée, brasée ou rivée.

7. Outil suivant la revendication 1 à 6, caractérisé en ce que des stabilités axiales pour les ségments de ruban (2) sont créées grâce à une ou plusieurs interruptions des rainures en direction tangentielle (10) par des coupes transversales en fome de bandes (11).

8. Outil suivant une des revendications 1 à 7, caractérisé en ce que l'effet de ressort (7 resp. zone 9) est orienté ou bien le long ou bien contre le cours des dents, et que les centres d'effet de ressort (7 resp. zone 5) se trouvent dans la région moyenne des structures de ruban (2).

**Claims**

1. A disk-shaped, rotary tool, in particular the blade of a circular saw, comprising teeth arranged on the circumference and flanges mounted in the blade center and including a centrical bore for receiving a driving shaft, characterized in that in the outer portion said tool comprises a plurality of slots or structural separations (1) which substantially extend in tangential direction and segment said tool in the fashion of webs (2), that the original blade plane (3) remains at one side of said tangential slots (1), and that a fan-shaped zone (5) is formed at the other side of said tangential slots (1) by slots or structural separations (4) which are mounted approximately radially and directed toward the periphery.

2. A tool according to claim 1, characterized in that one of said radial slots extends into said periphery and another one terminates in said tangential slot.

3. A tool according to claim 1, characterized in that said approximately radially extending slots (4) and said fan-shaped zones (5, from 4 and 6) are differently formed.

4. A tool according to claims 1 to 3, characterized in that said zones (5) with the strip-like cross-sectional formation (6) are treated in sectorial and selected hardening processes for achieving intensive tensions or resilient effects (Fw).

5. A tool according to claim 1, characterized in that the web structure (2) caused by said structural separation (1) and radial slot (8) is tensioned by a spring clip (7).

6. A tool according to claims 1 and 5, characterized in that said spring clip (7) is welded, soldered or riveted in place.

7. A tool according to claims 1 to 6, characterized in that axial stabilities for said web segments (2) are created through one or a plurality of interruptions of said tangentially extending slots (10) by strip-like cross-sectional formations (11).

8. A tool according to any of claims 1 to 7, characterized in that said resilience (7 and zone 9, respectively) acts either in the tooth direction or against the tooth direction, and that the resilience centers (7 and zone 5, respectively) are arranged in the central portion of said web structures (2).

Fig. 1